# EUROPEAN PATENT APPLICATION

(11) **EP 3 806 284 A1**
(43) Date of publication of application: **14.04.2021**
(21) Application number: 19202365.3
(22) Date of filing: 10.10.2019
(51) Int. Cl.: H02J 50/10, H02J 50/80, H02J 7/02, H02J 50/40

(54) **APPARATUS AND METHOD FOR WIRELESSLY CHARGING MOBILE DEVICES, AND MOBILE DEVICE**

(71) Applicant: Vestel Elektronik Sanayi ve Ticaret A.S., 45030 Manisa (TR)
(72) Inventor: ÇUBUKÇU, BARAN, 45030 Manisa (TR)
(74) Representative: Maikowski & Ninnemann Patentanwälte Partnerschaft mbB

(57) **Abstract**

The present disclosure relates to an apparatus (100) for wirelessly charging mobile devices (200). The apparatus (100) includes a charging unit (110) configured to wirelessly charge at least one mobile device (200); and a processor unit (120) configured to detect a sequence of on-states and off-states of a charging operation of a mobile device (200), wherein the sequence of on-states and off-states is caused by the mobile device (200) and is indicative of a charging state of the mobile device (200); and determine the charging state of the mobile device (200) based on the sequence of on-states and off-states.

## Description

### FIELD

Embodiments of the present disclosure relate to an apparatus and a method for wirelessly charging mobile devices, and further relate to a mobile device and a system having the apparatus and the mobile device. The embodiments of the present disclosure particularly relate to an indicator for showing a charging state of one or more mobile devices during a charging operation when a screen of the mobile device is turned off.

### BACKGROUND

Mobile devices include an internal power source, such as a rechargeable battery, that powers the mobile device. For informing a user about the charging state of the internal power source, the charging state can be represented as a status icon on a screen of the mobile device.

Wireless charging pads, which can charge the internal power source of the mobile device wirelessly, have become increasingly popular. However, in order to check the charging state of the mobile device, the user has to activate the screen of the mobile device to see the status icon. This may be inconvenient for a user and increase a power consumption of the mobile device.

In view of the above, new apparatuses and methods for wirelessly charging mobile devices as well as mobile devices that overcome at least some of the problems in the art are beneficial.

### SUMMARY

In light of the above, an apparatus and a method for wirelessly charging mobile devices, a mobile device, and a system having the apparatus and the mobile device are provided.

It is an object of the present disclosure to provide a convenient way for a user to check a charging state of a mobile device during a charging operation. It is another object of the present disclosure to reduce a power consumption of a mobile device.

Further objects, aspects, benefits, and features of the present disclosure are apparent from the claims, the description, and the accompanying drawings.

According to an independent aspect of the present disclosure, an apparatus for wirelessly charging mobile devices is provided. The apparatus includes a charging unit configured to wirelessly charge at least one mobile device and a processor unit. The processor unit is configured to detect a sequence of on-states and off-states of a charging operation of a mobile device, wherein the sequence of on-states and off-states is caused by the mobile device and is indicative of a charging state of the mobile device. The processor unit is further configured determine the charging state of the mobile device based on the detected sequence of on-states and off-states.

According to another independent aspect of the present disclosure, a mobile device is provided. The mobile device includes a power reception unit configured to receive power wirelessly from a charging pad and a processor configured to initiate a power transfer from the charging pad to the mobile device and terminate the power transfer from the charging pad to the mobile device. The processor is configured to initiate and terminate the power transfer from the charging pad to the mobile device to generate a sequence of on-states and off-states of a charging operation indicative of a charging state of the mobile device.

According to another independent aspect of the present disclosure, a system is provided. The system includes the apparatus and at least one mobile device according to the embodiments of the present disclosure.

According to another independent aspect of the present disclosure, a method for wirelessly charging mobile devices is provided. The method includes initiating and terminating, by a mobile device, a power transfer from a charging pad to the mobile device to generate a sequence of on-states and off-states of a charging operation indicative of a charging state of the mobile device; detecting, by the charging pad, the sequence of on-states and off-states; and determining, by the charging pad, the charging state of the mobile device based on the detected sequence of on-states and off-states.

Embodiments are also directed at means for carrying out the disclosed methods and include device or apparatus parts for performing each described method aspect. These method aspects may be performed by way of hardware components, a computer programmed by appropriate software, by any combination of the two or in any other manner. Furthermore, embodiments according to the disclosure are also directed at methods for operating the described apparatus, mobile device, and system. The methods include method aspects for carrying out every function of the apparatus, mobile device, and system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of an apparatus for wirelessly charging mobile devices according to embodiments described herein;
- FIG. 2: shows a sequence of on-states and off-states of a charging operation of a mobile device according to embodiments described herein; and
- FIG. 3: shows a flowchart of a method for wirelessly charging mobile devices according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Wireless charging pads can be used to charge the internal power source of a mobile device. However, in order to check the charging state of the mobile device, the user has to activate the screen of the mobile device to see the status icon. This may be inconvenient for a user and increase a power consumption of the mobile device due to the activation of the screen.

The present disclosure overcomes the above drawbacks by creating a communication path between the charging pad and the mobile device using power consumption data. In particular, the power transfer from the charging pad to the mobile device is turned on and off to generate an on/off sequence which is indicative of a charging state of the mobile device. Thus, the charging pad can determine the charging state of the mobile device and show it to the user while the screen of the mobile device is turned off.

Accordingly, the screen of the mobile devices does not have to be used during the charging operation to check the charging state, whereby a user convenience is increased, and a power consumption is reduced. Further, the charging pad can determine which mobile device of a plurality of mobile devices charged simultaneously needs energy more than the others. For example, if a mobile device is at 80%, Bluetooth earphones are at 95%, and a smartwatch is at 20%, the charging pad can maximize an energy transfer to the smartwatch.

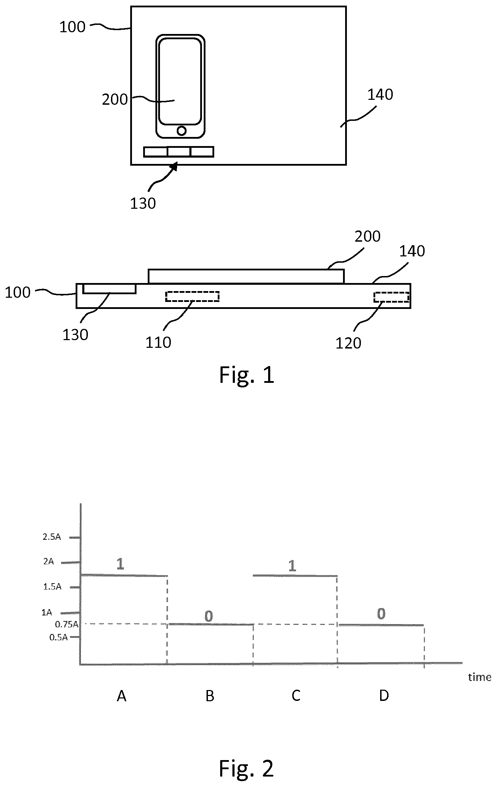

FIG. 1 shows a schematic view of an apparatus 100 for wirelessly charging mobile devices 200 according to embodiments described herein. The apparatus 100 can also be referred to as "charging pad".

The apparatus 100 includes a charging unit 110 configured to wirelessly charge at least one mobile device 200 and a processor unit 120. The processor unit 120 is configured to detect a sequence of on-states and off-states of a charging operation of a mobile device 200, wherein the sequence of on-states and off-states is caused by the mobile device 200 and is indicative of a charging state of the mobile device 200. The processor unit 120 is further configured to determine the charging state of the mobile device 200 based on the sequence of on-states and off-states.

The mobile device 200 includes a power reception unit configured to receive power wirelessly from the apparatus 100, which may be a charging pad, and a processor configured to initiate a power transfer from the apparatus 100 to the mobile device 200 and terminate the power transfer from the apparatus 100 to the mobile device 200. The processor is configured to initiate and terminate the power transfer from the apparatus 100 to the mobile device 200 to generate a sequence of on-states and off-states of a charging operation indicative of a charging state of the mobile device 200.

The sequence may include three or more states of the on-states and off-states, such as on-off-on. Accordingly, the sequence of the present disclosure is not a mere turning on and turning off of the charging operation at the beginning and the end of the charging operation, but is configured to transfer information.

The mobile device 200 receives power from the charging unit 110 of the apparatus 100 via the power reception unit. The power may be transferred wirelessly, and particularly inductively. For example, the charging unit 110 and the power reception unit may each include at least one coil configured for inductive coupling to transfer power from the charging unit 110 to the power reception unit of the mobile device 200.

The mobile device 200 can initiate and terminate the power transfer from the apparatus 100 to the mobile device 200 by suitable means known to the skilled person, for example via a Bluetooth connection, a turning on/off of the power reception device, and the like.

The mobile device 200 includes an internal power source which receives the power from the power reception unit, so as to charge the internal power source. The internal power source may be substantially any type of means that may provide power to one or more components of the mobile device 200. In some embodiments, the internal power source may be a rechargeable portable power source, such as one or more batteries. For example, in some embodiments, the power source 204 may be a rechargeable fast-charging battery or batteries. However, it should be noted that other types of power sources are envisioned as well.

The internal power source has a charging state, which may correspond to an amount of charge of the internal power source. For example, a charging state of the internal power source of 0% may correspond to an entirely empty internal power source, and a charging state of the internal power source of 100% may correspond to a fully charged internal power source.

The mobile device 200 may be watch, a mobile phone, earphones, a tablet, or the like. However, the present disclosure is not limited thereto and the mobile device 200 may be substantially any type of electronic device or computing device which can be charged wirelessly, including, but not limited to, a smart phone, a laptop or tablet computing device, a gaming device, a digital music player, a personal digital assistant, a remote control, a wearable computing device and/or display, and the like.

According to some embodiments, which can be combined with other embodiments described herein, the apparatus 100 further includes an indicator unit 130 configured to indicate the charging state of the at least one mobile device 200 during the charging operation.

The indicator unit 130 may include at least one of a light source, a color scheme, and a display. For example, the indicator unit 130 may include a scale which shows the charging state e.g. in percent. Additionally, or alternatively, the indicator unit 130 may include a color scheme which indicates an empty state in red, a half-full state in orange, and a full state in green. However, the present disclosure is not limited thereto and the indicator unit 130 may be configured in any way suitable to indicate the current charging state of the mobile device 200 to the user.

According to some embodiments, which can be combined with other embodiments described herein, the apparatus 100 further includes a support surface 140 configured to support the at least one mobile device 200 during charging. The support surface 140 may be an essentially flat surface.

In some embodiments, the apparatus 100 may be configured to wirelessly charge two or more mobile devices 200 simultaneously. The two or more mobile devices 200 may be located on the support surface 140 during charging.

According to some implementations, the apparatus 100, and in particular the charging unit 110, includes at least one coil configured for inductively charging the at least one mobile device 200. If the apparatus 100 is configured to wirelessly charge two or more mobile devices 200 simultaneously, one or more coils can be provided for each mobile device 200 of the two or more mobile devices 200.

According to some embodiments, which can be combined with other embodiments described herein, the apparatus 100, and in particular the processor unit 120, is configured to determine a mobile device 200 of the two or more mobile devices which provides the sequence of on-states and off-states based on a power output of the charging unit 110. In other words, the apparatus 100 can identify the mobile device 200 which currently communicates its charging state to the apparatus 100. The identification can be based on the turning on and turning off of the charging operation by the mobile device 200 which effects the power output of the charging unit 110.

In some implementations, the apparatus 100, and in particular the processing unit 120, can determine which mobile device 200 of the two or more mobile devices charged simultaneously needs energy more than the others. In particular, the processor unit 120 may be configured to determine a mobile device 200 of the two or more mobile devices which has a lowest charging state and to increase a charging power provided to the mobile device 200 having the lowest charging state. For example, if a mobile device is at 80%, Bluetooth earphones are at 95%, and a smartwatch is at 20%, the charging pad can maximize an energy transfer to the smartwatch. For example, if a mobile device is at 80%, Bluetooth earphones are at 95%, and a smartwatch is at 20%, the charging pad can maximize an energy transfer to the smartwatch. Such kind of maximizing may be effected by keeping input power to apparatus 100 stable, e.g. by decreasing the energy being transferred from the apparatus 100 to mobile devices 200 which has highest battery level. Thereby, apparatus 100 can keep its internal temperature stable by consuming the same input power although apparatus 100 maximized energy for the device which is at lowest battery level when compared to others.

According to the present disclosure, a communication path is formed between the apparatus 100 and the mobile device 200 during a charging operation. In order to form the communication path, the sequence of on-states and off-states of the charging operation of the mobile device 200 is used. The sequence of on-states and off-states is caused by the mobile device 200 and is indicative of a charging state of the mobile device 200.

The sequence may include three or more states of the on-states and off-states, such as on-off-on. Accordingly, the sequence of the present disclosure is not a mere turning on and turning off of the charging operation at the beginning and the end of the charging operation, but is configured to transfer information.

According to some embodiments, which can be combined with other embodiments described herein, the sequence of on-states and off-states defines a 0-1 binary communication. In particular, the sequence of on-states and off-states may be, or correspond to, a three-bit communication protocol. This is further explained in the following with respect to FIG. 2.

FIG. 2 shows a sequence of on-states and off-states of a charging operation according to embodiments described herein.

In order to create the communication path between the charging pad and the mobile device, power consumption data are used. In one example, a mobile phone is consuming 1A from the charging pad, a smart watch is consuming 0.5A from the charging pad, and Bluetooth earphones are consuming 0.25A from the charging pad. Thus, the charging pad will consume 1.75A in total (for simplicity neglecting an energy loss during magnetic transmission, heat, etc.).

In region A of the graph in FIG. 2, all devices are charged and thus, 1.75A is consumed. In region B, e.g. the mobile phone is removed, or the power transfer is stopped, and the total consumption drops to 0.75A. In region C, the mobile phone activates the power transfer again and the total consumption increases to 1.75A. Then, in region C, the mobile phone deactivates the power transfer and, again, the total consumption drops to 0.75A. Thereby, a sequence of on-states and off-states of the charging operation of the mobile phone is generated.

Accordingly, a 1-0 communication system can be established by cutting the power transfer off and activating the power transfer again. Thereby, each mobile device can communicate its battery level to the charging pad and the charging pad can show the battery level using, for example, colors. For example, red may be a low charging level, orange may be a middle charging level, and green may be a maximal charging level.

Additionally, since the charging pad can calculate a power transfer from each of its coils being used to transfer power, it can be determined which device is sharing the information regarding its charging state.

In the above manner, e.g. a 3-bit (or n-bit with n being ≥3) communication protocol can be established. Thereby, eight different charging levels can be indicated: 000, 001, 010, 011, 100, 101, 110, 111.

"000" may be a low charging level which is from 0% to 12.5%, and "111" can be a high charging level from 87.5% to 100%. For example, if a mobile device sends "000" to the charging pad, the charging pad may determine that the mobile device has a low charging level and the charging pad can show this information to notify the user.

The present disclosure is not limited to three bits and any suitable number of communication bits can be selected. In particular, the number of bits and can be three or higher, e.g. depending on a resolution required.

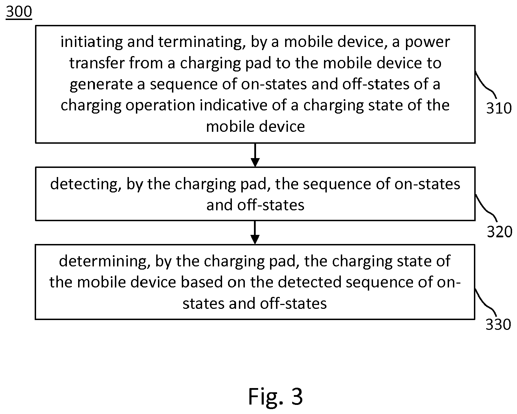

FIG. 3 shows a flowchart of a method 300 for wirelessly charging mobile devices according to embodiments described herein.

The method 300 includes in block 310 an initiating and a terminating of, by a mobile device, a power transfer from a charging pad to the mobile device to generate a sequence of on-states and off-states of a charging operation indicative of a charging state of the mobile device; in block 320 a detecting of, by the charging pad, the sequence of on-states and off-states; and in block 330 a determining of, by the charging pad, the charging state of the mobile device based on the detected sequence of on-states and off-states.

In some implementations, the method 300 further includes a displaying, by the charging pad, of the charging state of the mobile device e.g. by means of a display, light emitting diodes, color schemes, and the like.

The present disclosure creates a communication path between the charging pad and the mobile device using power consumption data. In particular, the power transfer from the charging pad to the mobile device is turned on and off to generate an on/off sequence which is indicative of a charging state of the mobile device. Thus, the charging pad can determine the charging state of the mobile device and show it to the user.

Accordingly, the screen of the mobile devices does not have to be used during the charging operation to check the charging state, whereby a user convenience is increased, and a power consumption is reduced. Further, the charging pad can determine which mobile device of a plurality of devices charged simultaneously needs energy more than the others.

While the foregoing is directed to embodiments of the disclosure, other and further embodiments of the disclosure may be devised without departing from the basic scope thereof, and the scope thereof is determined by the claims that follow.

## Claims

1. An apparatus (100) for wirelessly charging mobile devices (200), comprising:
a charging unit (110) configured to wirelessly charge at least one mobile device (200); and
a processor unit (120) configured to:
detect a sequence of on-states and off-states of a charging operation of a mobile device (200), wherein the sequence of on-states and off-states is caused by the mobile device (200) and is indicative of a charging state of the mobile device (200); and
determine the charging state of the mobile device (200) based on the sequence of on-states and off-states.

2. The apparatus (100) of claim 1, wherein the sequence of on-states and off-states defines a 0-1 binary communication.

3. The apparatus (100) of claim 2, wherein the sequence of on-states and off-states is a three-bit communication protocol.

4. The apparatus (100) of any one of claims 1 to 3, further including an indicator unit (130) configured to indicate the charging state of the at least one mobile device (200) during the charging operation.

5. The apparatus (100) of claim 4, wherein the indicator unit (130) includes at least one of a light source, a color scheme, and a display.

6. The apparatus (100) of any one of claims 1 to 5, wherein the charging unit (110) includes at least one coil configured for inductively charging the at least one mobile device (200).

7. The apparatus (100) of any one of claims 1 to 6, further including a support surface (140) configured to support the at least one mobile device (200) during the charging operation.

8. The apparatus (100) of any one of claims 1 to 8, wherein the charging unit (110) is configured to wirelessly charge two or more mobile devices (200) simultaneously.

9. The apparatus (100) of claim 8, wherein the processor unit (120) is configured to determine a mobile device (200) of the two or more mobile devices which provides the sequence of on-states and off-states based on a power output of the charging unit (110).

10. The apparatus (100) of claim 8 or 9, wherein the processor unit (120) is configured to determine a mobile device (200) of the two or more mobile devices which has a lowest charging state and to increase a charging power provided to the mobile device (200) having the lowest charging state.

11. The apparatus (100) of any one of claims 1 to 10, wherein the apparatus (100) is a charging pad.

12. A mobile device (200), comprising:
a power reception unit configured to receive power wirelessly from a charging pad (100); and
a processor configured to initiate a power transfer from the charging pad (100) to the mobile device (200) and terminate the power transfer,
wherein the processor is configured to initiate and terminate the power transfer to generate a sequence of on-states and off-states of a charging operation indicative of a charging state of the mobile device (200).

13. The mobile device (200) of claim 12, wherein the mobile device (200) is selected from the group consisting of a watch, a mobile phone, earphones, and a tablet.

14. A system (100, 200), comprising an apparatus (100) of any one of claims 1 to 11 and at least one mobile device (200) of claim 12 or 13.

15. A method (300) for wirelessly charging mobile devices, comprising:
initiating and terminating (310), by a mobile device, a power transfer from a charging pad to the mobile device to generate a sequence of on-states and off-states of a charging operation indicative of a charging state of the mobile device;
detecting (320), by the charging pad, the sequence of on-states and off-states; and
determining (330), by the charging pad, the charging state of the mobile device based on the detected sequence of on-states and off-states.

16. The method (300) of claim 15, further comprising:
displaying, by the charging pad, the charging state of the mobile device.
